## Europäisches Patentamt
## European Patent Office
## Office européen des brevets

(11) Veröffentlichungsnummer: **0 300 068**
**A1**

## EUROPÄISCHE PATENTANMELDUNG

(21) Anmeldenummer: 87110474.1

(22) Anmeldetag: 20.07.87

(51) Int. Cl.⁴ **B29C 45/06 , B29C 45/14 , A63H 18/02**

(43) Veröffentlichungstag der Anmeldung:
25.01.89 Patentblatt 89/04

(84) Benannte Vertragsstaaten:
AT BE CH DE ES FR GB GR IT LI LU NL SE

(71) Anmelder: **Hesse, Kurt**
**Waldstrasse 36**
**D-8510 Fürth(DE)**

(72) Erfinder: **Hesse, Kurt**
**Waldstrasse 36**
**D-8510 Fürth(DE)**

(74) Vertreter: **Hafner, Dieter, Dr.rer.nat.,**
**Dipl.-Phys.**
**Ostendstrasse 132**
**D-8500 Nürnberg 30(DE)**

(54) Verfahren zum Herstellen von Fahrbahnabschnitten für Spielfahrbahnen.

(57) Bei einem Verfahren zum Herstellen von Fahrbahnabschnitten (1) für Spielfahrbahnen unter Verwendung einer Spritzform, wobei die Fahrbahnabschnitte oberseitig parallel nebeneinander durch Stromabnehmer von Fahrspielzeugen abgreifbar ist, ist zur vereinfachten und schnellen Herstellung vorgesehen, daß die Stromleiter (3) in oben offene kastenförmige Formunterteile (4) lose eingelegt und die mit den Stromleitern (3) bestückten Formunterteile (4) nacheinander unterhalb eines als Dekkel in der Vertikalen verstellbaren gemeinsamen Formoberteils (5) gebracht werden und durch Absenken des Formoberteils (5) auf die Formunterteile (4) Schließvorgänge und durch Anheben des Formoberteils (5) von den Formunterteilen (4) Öffnungsvorgänge für die Spritzform erzielt werden.

Fig.1

EP 0 300 068 A1

## Verfahren zum Herstellen von Fahrbahnabschnitten für Spielfahrbahnen

Die Erfindung betrifft ein Verfahren zum Herstellen von Fahrbahnabschnitten für Spielfahrbahnen unter Verwendung einer Spritzform, wobei die Fahrbahnabschnitte oberseitig parallel nebeneinander durch Stromabnehmer von Fahrspielzeugen abgreifbare Stromleiter aufnehmen.

Es ist bekannt, Fahrbahnabschnitte für Spielfahrbahnen in Einzelwerkzeugen dergestalt herzustellen, daß zunächst ein Formteil aus einem plastisch verformbaren Werkstoff gebildet wird, der oberseitig Nuten für die Aufnahme von Stromleitern aufweist. Die Stromleiter werden nachfolgend manuell in die Nuten eingelegt und in diesen durch Klebung, Schweißung oder Quetschen fixiert. Abgesehen davon, daß es als nachteilig empfunden wird, für die Bildung der Fahrbahnabschnitte jeweils komplette Werkzeuge vorzusehen, ist auch das nachträgliche Einbringen der Stromleiter arbeits- und zeitaufwendig.

Es ist Aufgabe der Erfindung, Maßnahmen zur Vereinfachung und zur kurzfristigen Herstellung von Fahrbahnabschnitten zu schaffen.

Der Erfindung gemäß ist diese Aufgabe dadurch gelöst, daß die Stromleiter in oben offene kastenförmige Formunterteile lose eingelegt und die mit den Stromleitern bestückten Formunterteile nacheinander unterhalb eines als Deckel in der Vertikalen verstellbaren gemeinsamen Formoberteils gebracht werden und durch Absenken des Formoberteils auf die Formunterteile Schließvorgänge und durch Anheben des Formoberteils von den Formunterteilen Öffnungsvorgänge für die Spritzform erzielt werden. Mittels der Verfahrensschritte ist ein gemeinsames Oberteil mit einer Anzahl Formunterteilen nacheinander kompletierbar, was Werkzeugeinsparungen ergibt. Außerdem erlaubt die Verwendung eines gemeinsamen Formoberteils mit einer Anzahl Formunterteilen hohe Spritzfolgen. Schließlich führt das Einformen der Stromleiter zu sicheren Fixierungen derselben und Nacharbeiten entfallen. Die Herstellung der Fahrbahnabschnitte bedarf also eines kurzen Zeitaufwands und geringen Arbeitsaufwands.

Es versteht sich, daß die Verfahrensschritte bei beliebig langen Fahrbahnabschnitten in Anwendung gebracht werden können. Außerdem ist das Verfahren nicht auf bestimmte Formgestaltungen der Fahrbahnabschnitte beschränkt.

Bei einer Vorrichtung zur Durchführung des Verfahrens ist vorgesehen, die Formunterteile auf einer um eine vertikale Achse drehbare Abstützung nebeneinander auf eine Kreislinie anzuordnen und mittels der Abstützung unter einem in einem Maschinengestell durch einen vertikal bewegbar geführten Stempel getragenen Formoberteil zu bringen. Zweckmäßig kann die Abstützung durch einen Drehtisch gebildet sein, auf dem die Formunterteile nebeneinander aufgestellt und im Arbeitstakt dem Formoberteil zuführbar sind.

In Ausgestaltung einer Vorrichtung zur Durchführung des Verfahrens ist noch vorgesehen, die Abstützung für die Formunterteile durch eine taktweise längsbewegbare Tischplatte zu bilden, die durch einen Verschiebevorgang die Formunterteile nacheinander unterhalb des vertikal bewegbaren Formoberteils bringt.

Es entspricht der Erfindung, daß die gemeinsamen Trennflächen von Formoberteil und Formunterteil auch in der Vertikalen liegen können. Bei diesen Vorrichtungen ist dafür zu sorgen, daß die in den Formunterteilen einzulegenden Stromleiter in den Formunterteilen fixiert sind.

Die Erfindung ist in der Zeichnung anhand eines Ausführungsbeispiels verdeutlicht. Es zeigen

Fig. 1 ein Teilstück eines Fahrbahnabschnitts, perspektivish,

Fig. 2 ein Teilstück eines Fahrbahnabschnitts in Unteransicht,

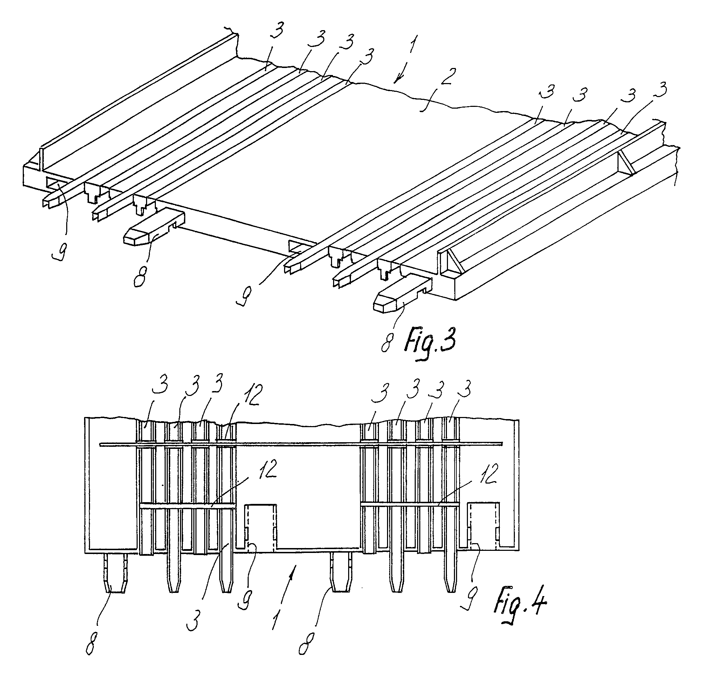

Fig. 3 eine Vorrichtung zur Durchführung des Verfahrens in Seitenansicht und

Fig. 4 eine Vorrichtung gemäß Fig. 3 in Draufsicht.

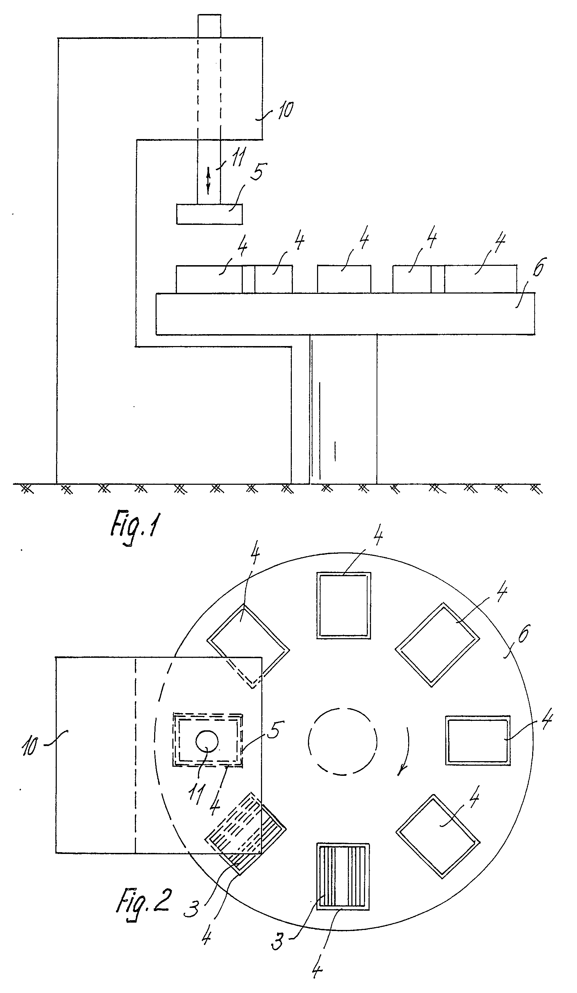

In den Fig. 1 und 2 sind mit 1 Fahrbahnabschnitte bezeichnet, die als Spritzformteile in Spritzformen herzustellen sind. Die Fahrbahnabschnitte weisen oberseitig eine weitgehend ebene Lauffläche 2 für Fahrspielzeuge (nicht gezeigt) auf, in die sich schienenförmige Stromleiter 3 nebeneinander fest erstrecken. Die Spritzformen sind durch eine Anzahl Formunterteile 4 und einen gemeinsamen Formoberteil 5 gebildet. Die Formunterteile 4 sind auf einem in der Horizontalen taktweise drehbaren Drehtisch 6 angeordnet, der die Formunterteile nacheinander unter den Formoberteil 5 bringt. Der Formoberteil 5 ist in einem Maschinengestell 10 vermittels eines Stempels 11 in der Vertikalen gehalten. Durch Stellbewegungen des Formoberteils 5 in der Vertikalen sind so nacheinander die Formunterteile 4 zu schließen bzw. zu öffnen. In die offenen Formunterteile 4 sind Stromleiter 3 einlegbar, die beim nachfolgenden Spritzvorgang in den Fahrbahnabschnitten 1 fixiert sind. Einige Stromleiter 3 überragen mit Verlängerungsabschnitten die stirnseitigen Enden der Fahrbahnabschnitte 1, die zum Zwecke der Kontaktierung der Stromleiter 3 benachbarter Fahrbahnabschnitte in Hohlräume von Stromleitern eingreifen. Zapfen 8 und Aufnahmen 9 sorgen für die Ausrichtung und die lösbare Halterung benachbarter Fahrbahnabschnitte aneinander. Die Fixierung der Stromleiter 3 im Fahrbahnabschnitt 1 wird durch unterseitige Querstege 12 unterstützt. Die Querstege 12 tragen gleichzeitig zur Verfestigung der Fahrbahnabschnitte 1 bei.

## Ansprüche

1. Verfahren zum Herstellen von Fahrbahnabschnitten für Spielfahrbahnen unter Verwendung einer Spritzform, wobei die Fahrbahnabschnitte oberseitig parallel nebeneinander durch Stromabnehmer von Fahrspielzeugen abgreifbare Stromleiter aufnehmen, dadurch gekennzeichnet, daß die Stromleiter in oben offene kastenförmige Formunterteile lose eingelegt und die mit den Stromleitern bestückten Formunterteile nacheinander unterhalb eines als Deckel in der Vertikalen verstellbaren gemeinsamen Formoberteils gebracht werden und durch Absenken des Formoberteils auf die Formunterteile Schließvorgänge und durch Anheben des Formoberteils von den Formunterteilen Öffnungsvorgänge für die Spritzform erzielt werden.

2. Vorrichtung zur Durchführung des Verfahrens, dadurch gekennzeichnet, daß die Formunterteile (4) auf einer um eine vertikale Achse drehbare Abstützung nebeneinander auf einer Kreislinie angeordnet und mittels der Abstützung unter einem in einem Maschinengestell (10) durch einenvertikal verschiebbar geführten Stempel (11) getragenen Formoberteil bringbar sind.

3. Vorrichtung nach Anspruch 2, dadurch gekennzeichnet, daß die Abstützung für die Formunterteile (4) durch einen Drehtisch (6) gebildet ist.

4. Vorrichtung nach Anspruch 3, dadurch gekennzeichnet, daß der Drehtisch (6) um vorbestimmte Winkelgrade im Arbeitstakt drehbar ist.

5. Vorrichtung nach Anspruch 1, dadurch gekennzeichnet, daß die Formunterteile (4) durch eine taktweise längsbewegliche Tischplatte gebildet ist.

Fig.1

Fig.2

Fig.3

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A- 980 078 (HELLERMANN) * Seite 2, Zeilen 95-103; Ansprüche 4,5,12; Figur 4 * --- | 1 | B 29 C 45/06 B 29 C 45/14 A 63 H 18/02 |
| Y | US-A-4 009 983 (JACOBS) * Spalte 3, Zeilen 15-63; Figuren 1,2 * --- | 1-5 | |
| Y | BRITISH PLASTICS, Band 44, Nr. 11, November 1971, Seiten 123-125, London, GB; "Covema-GBF rotativa insert-moulding machines" * Seiten 123,125 * --- | 1-4 | |
| Y | US-A-3 661 490 (TRUEBLOOD) * Spalte 2, Zeilen 14-48; Figur 1 * --- | 1-4 | |
| Y | FR-A-1 311 191 (SOC. DE MECANIQUE ET D'OUTILLAGE DE PRECISION) * Insgesamt * --- | 1-5 | |
| A | FR-A-1 304 389 (MINIC) * Insgesamt * ----- | 1 | RECHERCHIERTE SACHGEBIETE (Int. Cl.4) B 29 C A 63 H |

Der vorliegende Recherchenbericht wurde für alle Patentansprüche erstellt

| Recherchenort | Abschlußdatum der Recherche | Prüfer |
|---|---|---|
| DEN HAAG | 22-03-1988 | BOLLEN J.A.G. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
...................................................................
& : Mitglied der gleichen Patentfamilie, übereinstimmendes
   Dokument

EPO FORM 1503 03.82 (P0403)